Europäisches Patentamt

European Patent Office

Office européen des brevets

(19)

(11) Veröffentlichungsnummer: **0 118 111
B1**

(12) **EUROPÄISCHE PATENTSCHRIFT**

(45) Veröffentlichungstag der Patentschrift: **30.05.90**

(21) Anmeldenummer: **84102190.0**

(22) Anmeldetag: **01.03.84**

(51) Int. Cl.⁵: **H 04 Q 3/00**, H 04 M 3/22,
H 04 M 19/00

(54) **Verfahren zur Ermittlung des Schleifenzustandes einer Teilnehmeranschlussleitung.**

(30) Priorität: **04.03.83 DE 3307806**

(43) Veröffentlichungstag der Anmeldung:
**12.09.84 Patentblatt 84/37**

(45) Bekanntmachung des Hinweises auf die
Patenterteilung:
**30.05.90 Patentblatt 90/22**

(84) Benannte Vertragsstaaten:
**CH DE FR GB LI SE**

(56) Entgegenhaltungen:
**EP-A-0 026 411
EP-A-0 127 137**

(73) Patentinhaber: **Siemens Aktiengesellschaft
Wittelsbacherplatz 2
D-8000 München 2 (DE)**

(72) Erfinder: **Leutner, Klaus
Goerdelerstrasse 2
D-8025 Unterhaching (DE)**
Erfinder: **Nagler, Werner, Dipl.-Ing.
Lipowskystrasse 8
D-8000 München 70 (DE)**

## Beschreibung

Die Erfindung betrifft ein Verfahren zur Ermittlung des Schleifenzustandes einer Teilnehmeranschlußleitung, die je nach vermittlungstechnischem Betriebszustand hochohmig oder niederohmig an eine Speisespannungsquelle angeschlossen ist, durch eine den Schleifenzustand charakterisierende Potentialverhältnisse auf den Adern der Teilnehmeranschlußleitung bewertende Indikationsschaltung.

Bei einer bekannten Teilnehmeranschlußschaltung zum Anschluß einer Teilnehmeranschlußleitung an eine Fernsprechvermittlungsstelle (DE-A-29 39 009) bei der die obengenannten schaltungstechnischen Voraussetzungen gegeben sind, kann gewährleistet werden, daß die Speisespannungsquelle der Vermittlungsstelle, die mehrere solcher Teilnehmeranschlußleitungen bedient, nicht überlastet wird, da nicht in allen Betriebszuständen der maximale Speisestrom aufgenommen wird. Der Anschluß der Adern der Teilnehmeranschlußleitung erfolgt bei dieser Teilnehmeranschlußschaltung jeweils über die Reihenschaltung wenigstens eines · niederohmigen Widerstandes und eines niederohmig überbrückbaren hochohmigen Widerstandes, die so bemessen sind, daß in den Betriebszuständen, in denen die hochohmigen Widerstände nicht überbrückt sind, z.B. im Ruhezustand, noch ein ausreichend grosser Strom fließt, um mit Hilfe der Indikationsschaltung eine Schleifenschlußindikation vornehmen zu können. Im Gesprächszustand und in der Rufphase sind die hochohmigen Widerstände zumindest im Falle des in der einen Leitungsader liegenden Widerstandes niederohmig überbrückt, so daß der volle oder zumindest ein höherer Speisestrom als im Ruhezustand fliessen kann.

Bei dieser Teilnehmeranschlußschaltung ist es möglich, zu verhindern, daß ein Erdschluß der spannungsführenden Ader oder eine überlange Erdtastenbetätigung im Teilnehmerapparat zu einer Überlastung der im Speisestromkreis liegenden Schaltelemente führt, da in einem solchen Falle wieder vom niederohmigen auf den hochohmigen Anschluß der Teilnehmeranschlußleitung umgeschaltet wird.

Wenn, bedingt durch eine Störung bei einer solchen Teilnehmeranschlußschaltung im Betriebszustand "Ruhe" der Ableitwiderstand nach einem Erdpotential führenden Schaltungspunkt z.B. durch Feuchtigkeit im Kabel unter den zugelassenen Wert absinkt, dann werden sich Potentialverhältnisse einstellen, die von der Indikationsschaltung als Schleifenschluß gewertet werden. Die dementsprechende Meldung "Schleife geschlossen" an die Steuerung der Vermittlungsstelle führt dann, wie angedeutet zu einer Umschaltung von hochohmigem Anschluß auf niederohmigen Anschluß der Teilnehmeranschlußleitung an die Speisespannungsquelle.

Dauert zu diesem Zeitpunkt die Störung an, dann können sich auf den Adern der Teilnehmeranschlußleitung Potentialverhältnisse einstellen, die von der Indikationsschaltung als Schleifenunterbrechung gewertet werden mit der Folge einer entsprechenden Meldung an die Steuerung, so daß wieder der Betriebszustand "Ruhe" hergestellt wird. Die Vorgänge wiederholen sich während der Dauer der Störung was zu einer unnötigen und unerwünschten Verkehrsbelastung der Steuerung der Vermittlung führt.

Die Aufgabe der vorliegenden Erfindung besteht daher darin, ein Verfahren anzugeben, das unter den genannten Voraussetzungen zu eindeutigen, d.h. von solchen Störungen unabhängigen Aussagen über den Schleifenzustand einer Teilnehmeranschlußleitung führt.

Erfindungsgemäß ist dieses Verfahren dadurch gekennzeichnet, daß bei Auftreten eines aus dem Betriebszustand "Ruhe" heraus, indem die Teilnehmeranschlußleitung hochohmig an die Speisespannungsquelle angeschlossen ist, von der Indikationsschaltung gelieferten Schleifenschlußsignals unverzüglich eine Belegung der Teilnehmeranschlußleitung an eine zentrale Steuerung gemeldet und danach eine Umschaltung auf niederohmigen Anschluß der Teilnehmeranschlußleitung vorgenommen wird, eine Weiterführung des Verbindungsaufbaues jedoch erst veranlaßt wird, wenn eine erste Wartezeitspanne abgelaufen ist, ohne daß die Indikationsschaltung ein Schleifenunterbrechungssignal geliefert hat, daß bei Auftreten eines solchen Schleifenunterbrechungssignals während der ersten Wartezeitspanne unverzüglich eine Umschaltung auf hochohmigen Anschluß der Teilnehmeranschlußleitung an die Speisespannungsquelle vorgenommen, eine das Einhängen bei der an die Teilnehmeranschlußleitung angeschlossenen Teilnehmerstation meldendes Signal an die Steuerung aber erst abgegeben wird, wenn das Schleifenunterbrechungssignal eine zweite mit dessen Auftreten beginnende Wartezeitspanne überdauert hat, und daß, sofern während dieser zweiten Wartezeitspanne wieder das Schleifenschlußsignal erscheint ein eine unnötige Belegung angebendes Signal an die Steuerung geliefert und unter Beibehaltung des hochohmigen Anschlusses der Teilnehmeranschlußleitung so lange ein Betriebszustand eingestellt wird, in dem weder eine Vorbelegung erfolgen kann noch von der Teilnehmestation aus weitere vermittlungstechnische Vorgänge veranlaßt werden können, bis wieder ein Schleifenunterbrechungssignal auftritt, das die zweite Wartezeitspanne überdauert.

Aufgrund des erfindungsgemäßen Vorgehens werden endgültige den Verbindungsaufbau bzw. das Auslösen betreffende Schaltmaßnahmen erst dann vorgenommen wenn eindeutig festgestellt werden kann, daß das von der Indikationsschaltung gelieferte Schleifenschlußsignal bzw. Schleifenunterbrechungssignal tatsächlich die Folge eines Aushängens oder Einhängens bei der Teilnehmerstation ist.

Die genannte zweite Wartezeitspanne ist dabei länger bemessen als die mindestens zu erwartende Zeitspanne zwischen einem Einhängen und einem Aushängen bei der Teilnehmerstation.

Gemäß einer weiteren Ausgestaltung der Erfindung werden die Wartezeitspannen mit Hilfe jeweils eines Zeitgliedes erzeugt, von denen das zur Erzeugung der zweiten Wartezeitspanne dienende vor Ablauf der betreffenden Zeitspanne rückgesetzt wird, wenn ein Schleifenschlußsignal erscheint.

Nachstehend wird das erfindungsgemäße Verfahren anhand eines Ausführungsbeispieles unter Bezugnahme auf eine Zeichnung näher erläutert.

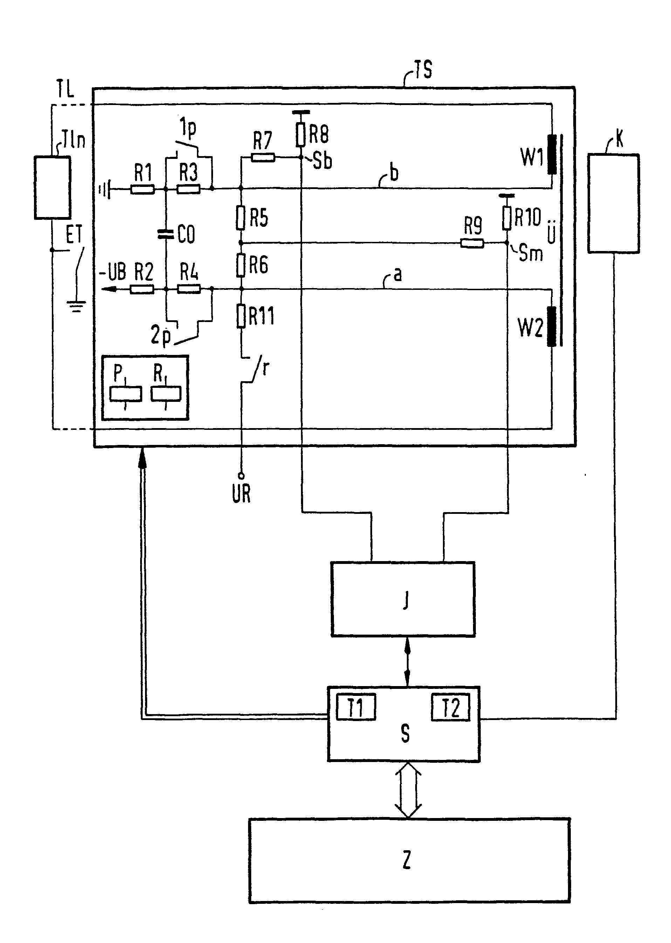

Die Zeichnung zeigt in Blockschaltbildform eine Schaltungsanordnung zur Durchführung des erfindungsgemäßen Verfahrens, und zwar im zum Verständnis der Erfindung erforderlichen Umfang eine Teilnehmeranschlußschaltung TS für den Anschluß einer Teilnehmeranschlußleitung TL, deren Schleifenzustand überwacht werden soll, an eine nicht näher dargestellte Vermittlungsstelle.

Bestandteil dieser Teilnehmeranschlußschaltung ist eine aus den Widerständen R1 bis R4 gebildete Speiseschaltung, über die die Adern a und b der Teilnehmeranschlußleitung TL an eine Speisespannungsquelle gelegt sind, die eine Speisespannung UB liefert. Der Anschluß der Leitungsadern erfolgt dabei jeweils über einen niederohmigen Widerstand R1 bzw. R2 sowie über einen dazu in Reihe liegenden hochohmigen Widerstand R3 und R4. Die hochohmigen Widerstände R3 und R4 sind jeweils durch Schaltstrecken 1p und 2p jeweils eines Relais P1, P2 niederohmig überbrückbar. Weiterer Bestandteil der Speiseschaltung ist ein Kondensator CO, der die Verbindungspunkte der Widerstände R1 und R2 einerseits und der Widerstände R3 und R4 andererseits verbindet.

Die Teilnehmeranschlußschaltung TS enthält Anschaltepunkte für eine Indikationsschaltung I zur Ermittlung des Schleifenzustandes der Teilnehmeranschlußleitung TL. Hierzu sind die Leitungsadern a und b durch die Reihenschaltung hochohmiger Widerstände R5 und R6 überbrückt, wobei zwischen dem Verbindungspunkt dieser Widerstände und Erdpotential ein aus den Widerständen R9 und R10 gebildeter Spannungsteiler liegt, dessen Teilerpunkt Sm den einen Anschaltepunkt der Indikationsschaltung I bildet. Der zweite Anschaltepunkt Sb ist der Teilerpunkt eines aus den Widerständen R7 und R8 gebildeten, zwischen der Leitungsader b und Erdpotential liegenden Spannungsteilers.

Die Teilnehmeranschlußschaltung zeigt ferner die zweidrahtseitigen Wicklungen W1 und W2 eines Gabelübertragers Ü für den Zweidraht-Vierdraht-Übergang zwischen der Teilnehmeranschlußleitung TL und dem vierdrähtig arbeitenden, hier nur angedeuteten Koppelfeld K der Vermittlungsstelle, zu der die gezeigte Teilnehmeranschlußschaltung gehört. Es ist ferner ein Relais R mit einem Kontakt r angedeutet, über den eine Rufwechselspannung UR auf die Teilnehmeranschlußleitung gekoppelt werden kann.

Die Indikationsschaltung I kann zentral für mehrere Teilnehmeranschlußschaltungen vorgesehen sein. Sie ist, ohne daß dies hier im einzelnen dargestellt ist, so ausgestattet, daß sie den Schleifenzustand der Teilnehmeranschlußleitung in allen Betriebszuständen, also im Betriebszustand "Ruhe", im Betriebszustand "Gespräch/Wahlaufnahme" und im Betriebszustand "Ruf" feststellen kann, wozu bei ihr jeweils unterschiedliche Schwellwerte wirksam geschaltet werden. Die Indikationsschaltung I korrespondiert mit der Steuerung Z der Vermittlungsstelle über eine Schnittstellenschaltung S, über die auch die von der Steuerung an die Teilnehmerschaltung abgegebenen Befehle laufen.

In der Schnittstellenschaltung sind zwei Zeitglieder T1 und T2 angedeutet, die für die Einhaltung der gemäß der Erfindung vorgesehenen Wartezeitspannen verantwortlich sind.

Bei der nachstehenden Erläuterung des Ablaufes des erfindungsgemäßen Verfahrens wird vom Betriebszustand "Ruhe" ausgegangen, in dem wegen des aufgelegten Hörers bei der an die Teilnehmeranschlußleitung TL angeschlossene Teilnehmerstation Tln die Teilnehmerleitungsschleife unterbrochen ist und die Schaltstrecken 1p und 2p der Relais P1, P2 geöffnet sind, also die Teilnehmeranschlußleitung hochohmig an der Speisespannungsquelle liegt.

Ein Abnehmen des Hörers bei der Teilnehmerstation TLn bewirkt einen Schleifenschluß und damit eine derartige Veränderung der Potentialverhältnisse an den Schaltungspunkten Sm und Sb, daß der bei der Indikationsschaltung I wirksame Schwellwert überschritten wird und diese ein Schleifenschlußsignal abgibt.

Ein solches Schleifenschlußsignal entsteht aber auch wenn bei aufgelegtem Hörer aufgrund einer Störung der Ableitwiderstand zwischen den Leitungsadern der Teilnehmeranschlußleitung unter den vorgegebenen Mindestwert absinkt oder Erdpotential an einer Leitungsader anliegt.

Wenn nach dem Wechsel auf niederohmige Anschaltung an die Speisespannungsquelle die genannte Störung andauert stellen sich an den Schaltungspunkten Sm und Sb Potentialverhaltnisse ein, die den Potentialverhältnissen bei unterbrochener Leitungsschleife und hochohmiger Anschaltung an die Speisespannungsquelle entsprechen, so daß die Indikationsschaltung wieder ansprechen würde.

Erfindungsgemäß wird nun aber so vorgegangen, daß bei Auftreten eines Schleifenschlußsignals aus dem Betriebszustand "Ruhe" heraus zwar unverzüglich an die Steuerung eine Belegungsmeldung abgegeben wird und danach ein Wechsel von hochohmiger Anschaltung auf niederohmige Anschaltung der Teilnehmeranschlußleitung an die Speisespannungsquelle durch Ansteuerung des Relais p veranlaßt wird, gleichzeitig aber eine Wartezeitspanne, beispielsweise durch Setzen des Zeitgliedes T1 wirksam geschaltet wird. Wenn diese Wartezeitspanne verstreicht, ohne daß die Indikationsschaltung ein Schleifenunterbrechungssignal geliefert hat, ist dies ein Hinweis darauf, daß das Schleifenschlußsignal tatsächlich die Folge des Aushängens beim Teilnehmer war, so daß nunmehr sich die weiteren für einen Verbindungsaufbau erforderlichen Vorgänge anschließen können.

Tritt dagegen während des Verlaufes der ersten Wartezeitspanne wieder ein Schleifenunterbrechungssignal auf, so kann dies, wie obenstehend angegeben, die Folge eines zu niedrigen Ableitwiderstandes oder Erdschlusses sein, aber auch damit zusammenhängen, daß bei der Teilnehmerstation wieder eingehängt oder vorzeitig mit einer Wahl begonnen wurde. Um hier eine Unterscheidung vornehmen zu können, wird erfindungsgemäß bei Auftreten eines Schleifenunterbrechungssignals während der ersten Wartezeitspanne unverzüglich eine Umschaltung auf hochohmigen Anschluß der Teilnehmeranschlußleitung an die Speisespannungsquelle veranlaßt und gleichzeitig eine zweite Wartezeitspanne wirksam geschaltet, beispielsweise durch Setzen des Zeitgliedes T2. Überdauern die Potentialverhältnisse, die von der Indikationsschaltung als Schleifenunterbrechung gewertet worden sind, diese zweite, Wartezeitspanne, dann wird ein das Einhänge bei der Teilnehmerstation meldendes Signal an die Steuerung abgegeben, womit unter der Voraussetzung, daß die zweite Wartezeitspanne kürzer ist als die mindestens zu erwartende Zeitspanne zwischen einem Einhängen und einem Aushängen bei der Teilnehmerstation aber länger als längstmögliche Wählimpulse dann feststeht, daß das abgegebene Schleifenunterbrechungssignal tatsächlich die Folge des Einhängens bei der Teilnehmerstation war. Wenn dagegen während der zweiten Wartezeitspanne wieder das Schleifenschlußsignal erscheint, steht fest, daß dieses Schleifenschlußsignal auf einen zu niedrigen Ableitwiderstand oder vorzeitige Wahl zurückzuführen ist. Es wird daher nunmehr unter Beibehaltung des hochohmigen Anschlusses der Teilnehmeranschlußleitung an die Speisespannungsquelle ein Betriebszustand eingestellt, in dem weder eine Belegung erfolgen kann, noch von der Teilnehmerstation aus weitere vermittlungstechnische Vorgänge veranlaßt werden können, beispielsweise Einstellvorgänge aufgrund der Wahl. Dieser Zustand dauert so lange an, bis wieder ein Schleifenunterbrechungssignal auftritt, das dann die Folge des Wegfalles der bis dahin vorliegenden Störung ist.

Es kann auch vorgesehen sein, ein Fehlersignal zu erzeugen, wenn das Schleifenunterbrechungssignal in diesem Stadium zu lange ausbleibt, also nicht mehr zu erwarten ist, daß der Ableitwiderstand wieder von selbst über den vorgegebenen Grenzwert ansteigt.

**Patentansprüche**

1. Verfahren zur Ermittlung des Schleifenzustandes einer Teilnehmeranschlußleitung, die je nach vermittlungstechnischem Betriebszustand hochohmig oder niederohmig an eine Speisespannungsquelle angeschlossen ist, durch eine den Schleifenzustand charakterisierende, Potentialverhältnisse auf den Adern der Teilnehmeranschlußleitung bewertende Indikationsschaltung, dadurch gekennzeichnet, daß bei Auftreten eines aus dem Betriebszustand "Ruhe" heraus, indem die Teilnehmeranschlußleitung (TL) hochohmig an die Speisespannungsquelle angeschlossen ist, von der Indikationsschaltung (I) gelieferten Schleifenschlußsignals unverzüglich eine Belegung an eine zentrale Steuerung (Z) gemeldet und danach eine Umschaltung auf niederohmigen Anschluß der Teilnehmeranschlußleitung vorgenommen wird, eine Weiterführung des Verbindungsaufbaues jedoch erst veranlaßt wird, wenn eine erste Wartezeitspanne (T1) abgelaufen ist, ohne daß die Indikationsschaltung (I) ein Schleifenunterbrechungssignal geliefert hat, daß bei Auftreten eines solchen Schleifenunterbrechungssignals während de ersten Wartezeitspanne (T1) unverzüglich eine Umschaltung auf hochohmigen Anschluß der Teilnehmeranschlußleitung (TL) an die Speisespannungsquelle vorgenommen wird, eine das Einhängen bei der an die Teilnehmeranschlußleitung (TL) angeschlossenen Teilnehmerstation (Tln) meldendes Signal an die Steuerung (Z) aber erst abgegeben wird, wenn das Schleifenunterbrechungssignal eine zweite mit dessen Auftreten beginnende Wartezeitspanne (T2) überdauert hat, und daß, sofern während dieser zweiten Wartezeitspanne wieder das Schleifenschlußsignal erscheint ein eine unnötige Belegung angebendes Signal an die Steuerung geliefert und unter Beibehaltung des hochohmigen Anschlusses der Teilnehmeranschlußleitung (TL) so lange ein Betriebszustand eingestellt wird, in dem weder eine Belegung erfolgen kann noch von der Teilnehmerstation (Tln) aus weitere vermittlungstechnische Vorgänge veranlaßt werden können, bis wieder ein Schleifenunterbrechungssignal auftritt, das die zweite Wartezeitspanne überdauert.

2. Verfahren nach Anspruch 1, dadurch gekennzeichnet, daß die erste Zeitspanne möglichst kurz ist jedoch die Reaktionszeit der Indikationsschaltung überdauert und die zweite Wartezeitspanne (T2) kürzer als die mindestens zu erwartende Zeitspanne zwischen einem Einhängen und einem Aushängen bei der Teilnehmerstation (Tln) und länger als der längstmögliche Wahlimpuls ist.

3. Verfahren nach Anspruch 1 oder 2, dadurch gekennzeichnet, daß die genannten Wartezeiten mit Hilfe jeweils eines Hardware-Zeitgliedes (T1, T2) erzeugt werden, von denen das zur Erzeugung der zweiten Wartezeitspanne dienende (T2) vor Ablauf der betreffenden Zeitspanne rückgesetzt wird, wenn ein Schleifenschlußsignal erscheint.

4. Verfahren nach Anspruch 1 oder 2, dadurch gekennzeichnet, daß die genannten Wartezeitspannen jeweils durch eine entsprechende Programmsteuerung von Speicherzellen erzeugt werden.

**Revendications**

1. Procédé pour déterminer l'état de la boucle d'une ligne d'abonné qui est raccordée selon une liaison de forte valeur ohmique ou de faible valeur ohmique, en fonction de l'état de fonctionnement technique de commutation, à des sources de tension d'alimentation, à l'aide d'un circuit indicateur caractérisant l'état de la boucle et évaluant les conditions de potentiel dans les conducteurs de la ligne d'abonné, caractérisé par le fait que, lors de l'apparition d'un signal de fermeture de la boucle, délivré par le circuit indicateur (I) à partir de l'état de fonctionnement "repos", dans lequel la ligne d'abonné (TL) est raccordée selon une liaison de forte valeur ohmique à la source de tension d'alimentation, une occupation est signalée immédiatement à un dispositif de commande central (Z) et ensuite une commutation sur le raccordement à faible valeur ohmique de la ligne d'abonné est réalisée, mais la poursuite de l'établissement de la liaison n'est déclenchée que lorsqu'un premier intervalle de temps d'attente (T1) s'est écoulé, sans que le circuit indicateur (I) ait délivré un signal d'interruption de la boucle, que lors de l'apparition d'un tel signal d'interruption de la boucle pendant le premier intervalle de temps d'attente (T1), une commutation est réalisée immédiatement sur le raccordement, selon une liaison de forte valeur ohmique, de la ligne d'abonné (TL) à la source de tension d'alimentation, mais qu'un signal indiquant le raccrochage dans le poste d'abonné (TLn) raccordé à la ligne d'abonné (TL), est envoyé au dispositif de commande (Z) uniquement lorsque le signal d'interruption de la boucle persiste au-delà d'un second intervalle de temps d'attente (T2) commençant lors de l'apparition de ce signal et que, dans la mesure où pendant ce second intervalle de temps d'attente le signal de fermeture de la boucle apparaît à nouveau, un signal indiquant une occupation inutile est envoyé au dispositif de commande et, moyennant le maintien du raccordement, selon une liaison de forte valeur ohmique, de la ligne d'abonné TL, un état de fonctionnement, lors duquel aucune occupation ne peut être exécutée ni aucune autre opération technique de commutation ne peut être encore exécutée à partir du poste d'abonné (TLn), est réglé, jusqu'à ce qu'apparaisse à nouveau un signal d'interruption de la boucle, qui persiste au-delà du second intervalle de temps d'attente.

2. Procédé suivant la revendication 1, caractérisé par le fait que le premier intervalle de temps est aussi bref que possible, mais dépasse le temps de réaction du circuit indicateur et que le second intervalle de temps d'attente (T2) est inférieur à l'intervalle de temps minimum auquel il faut s'attendre, entre un raccrochage et un décrochage dans le poste d'abonné (TLn), et est supérieur à l'impulsion de sélection la plus longue possible.

3. Procédé suivant la revendication 1 ou 2, caractérisé par le fait que les temps d'attente indiqué sont produits à l'aide de circuits matériels de temporisation (T1, T2), le circuit d'attente (T2) utilisé pour produire le second intervalle de temps étant ramené à zéro avant l'écoulement de l'intervalle de temps considéré, lorsqu'un signal de fermeture de la boucle apparaît.

4. Procédé suivant la revendication 1 ou 2, caractérisé par le fait que lesdits intervalles de temps d'attente sont produits respectivement par une commande programmée correspondante de cellules de mémoire.

## Claims

1. Method of detecting the loop state of a subscriber junction line which is connected, depending on the condition of switching operations, with high impedance or low impedance to a feed voltage source, by means of an indication circuit which characterizes the loop state and evaluates potential conditions on the wires of the subscriber junction line, characterized in that when a loop closure signal supplied by the indication circuit (I) occurs from the "rest" state of operation in which the subscriber junction line (TL) is connected with high impedance to the feed voltage source, a seizure is signalled without delay to a central control system (Z) and thereafter the subscriber junction line is switched to low-impedance connection, a continuation of the setting-up of the connection, however, is initiated only when a first waiting time period (T1) has elapsed without the indication circuit (I) having supplied a loop interruption signal, that when such a loop interruption signal occurs during the first waiting time period (T1), a switch-over to high-impedance connection of the subscriber junction line (TL) to the feed voltage source is effected without delay, a signal indicating the on-hook state of the subscriber station (Tln) connected to the subscriber junction line (TL) is only emitted, however, to the control system (Z) when the loop interruption signal has lasted longer than a second waiting time period (T2) which begins with the signal's occurrence, and that, if the loop closure signal again appears during this second waiting time period, a signal indicating an unnecessary seizure is supplied to the control system and, maintaining the high-impedance connection of the subscriber junction line (TL), an operating condition in which neither a seizure can be effected nor further switching operations can be initiated from the subscriber station (Tln), is set until a loop interruption signal occurs again which lasts longer than the second waiting time period.

2. Method according to Claim 1, characterized in that the first time period is as short as possible but lasts longer than the response time of the indication circuit and the second waiting time period (T2) is shorter than the minimum time period to be expected between an on-hook state and an off-hook state at the subscriber station (Tln) and longer than the longest possible dialling pulse.

3. Method according to Claim 1 or 2, characterized in that the said waiting times are generated with the aid of in each case one hardware timing section (T1, T2) of which the one (T2) used for generating the second waiting time period is reset before the relevant time period has elapsed, when a loop closure signal appears.

4. Method according to Claim 1 or 2, characterized in that the said waiting time periods are in each case generated by storage cells by means of an appropriate program control.